# EUROPÄISCHE PATENTSCHRIFT

(11) **EP 1 648 597 B1**
(45) Veröffentlichungstag und Bekanntmachung des Hinweises auf die Patenterteilung: **17.09.2008**
(21) Anmeldenummer: 04763086.8
(22) Anmeldetag: 03.07.2004
(51) Int. Cl.: B01D 71/02, B01D 67/00

(54) **FILTERELEMENT UND VERFAHREN ZU DESSEN HERSTELLUNG**
FILTER ELEMENT AND METHOD FOR THE PRODUCTION THEREOF
ELEMENT DE FILTRE ET PROCEDE DE FABRICATION DUDIT ELEMENT DE FILTRE

(30) Priorität: 11.07.2003 DE 10331709; 18.11.2003 DE 10353894
(43) Veröffentlichungstag der Anmeldung: 26.04.2006
(73) Patentinhaber: NFT Nanofiltertechnik Gesellschaft mit beschränkter Haftung, 61348 Bad Homburg v.d.H. (DE)
(72) Erfinder: HOFMANN, Wilfried, 80802 München (DE)
(74) Vertreter: von Bülow, Tam
(86) Internationale Anmeldenummer: PCT/EP2004/007262
(87) Internationale Veröffentlichungsnummer: WO 2005/007276

(56) Entgegenhaltungen:
- EP-A- 0 879 635
- WO-A-01/36321
- WO-A-03/068373
- CH-A- 678 403
- US-A- 5 753 014

## Beschreibung

Die vorliegende Erfindung betrifft ein Filterelement, insbesondere einen Membranfilter, und ein Verfahren zu dessen Herstellung.

Filterverfahren lassen sich im wesentlichen zunächst in eine sog. Kuchenfiltration, Tiefenfiltration sowie Oberflächenfiltration unterteilen. Während bei der Kuchenfiltration ein sich auf einer relativ groben Unterlage bildender Filterkuchen die Filtration übernimmt und bei der Tiefenfiltration die überwiegende Filtrationswirkung mechanisch und adsorptiv im Innern eines Filtermediums stattfindet, erfolgt bei der Oberflächenfiltration die überwiegende Filtrationswirkung mechanisch durch Abtrennen von z.B. Feststoffpartikeln auf der Oberfläche eines Filtermediums, wie z.B. eines Filterelements.

Das Filterelement gemäß der vorliegenden Erfindung betrifft die Oberflächenfiltration, bei der die Anströmung des Filters entweder im wesentlichen senkrecht zur Filteroberfläche (sog. "statische" oder auch "Dead-end-Filtration") oder im wesentlichen parallel zur Filteroberfläche (sog. "Crossflow-Filtration") stattfinden kann.

Bei der statischen Filtration bildet das Retentat (die zurückgehaltenen Stoffe) im Laufe der Filtration einen sog. Filterkuchen, in dem zunehmend Tiefenfiltration stattfindet und der den Filterdurchsatz im Laufe der Zeit reduziert. Der Kuchenbildung wird meist u.a. durch oberflächenparallele Überströmung des Filtermediums und/oder Rückspülung durch das Filtermedium entgegengewirkt.

Für die Oberflächenfiltration eignen sich besonders Membranfilter. Heutzutage überwiegend eingesetzte Membranfilter weisen z.B. Polymermembranen (z.B. aus Polyester, PP-Polyester, PVDF = Polyvinylidenfluorid etc.) oder keramische Membranen (z.B. aus Zirkoniumoxid, SiC, Si₃N₄ , Al₂O₃ etc.) auf. Derartige Membransysteme weisen allerdings zahlreiche Nachteile auf. So ist deren Verteilung des "Porendurchmessers" verhältnismäßig breit, was keine gute sog. Trennschärfe der Membran zur Folge hat. Eigentlich zurückzuhaltende Stoffe können dann die Membran passieren. Bei keramischen Membranen trifft man außerdem auf das Problem des verhältnismäßig geringen Durchsatzes, da bei diesen verhältnismäßig lange "Poren" (im Vergleich zu den "Porendurchmessern"; also eher Kanäle) mit hohem Strömungswiderstand vorhanden sind. Darüber hinaus sind solche Membranfilter hinsichtlich chemischer Beständigkeit und Temperaturbeständigkeit beschränkt. Bei einigen der erwähnten Membransysteme kommt wegen der verhältnismäßig unebenen bzw. rauhen Membranoberfläche noch das Problem einer leichten Kuchenbildung (selbst im Crossflow-Betrieb) hinzu. Einige der genannten Membransysteme sind darüber hinaus hinsichtlich des maximalen Differenzdruckes über die Membran (und damit hinsichtlich einer Erhöhung des Durchsatzes über eine Erhöhung des Differenzdruckes) beschränkt.

In den letzten Jahren wurden Membranfilter auf der Basis von z.B. Si bzw. SiO₂, Si₃N₄ etc. vorgeschlagen, die mit Hilfe von Ätz- und Lithographieverfahren hergestellt werden.

Ein Beispiel hierzu ist in dem Patent US 5,543,046 beschrieben. Hier wird ein Verfahren zur Herstellung einer anorganischen Membran beschrieben, die auf einem makroporösen Träger mit einer zunächst dazwischen angeordneten "flattening layer" durch z.B. CV- oder Sputterverfahren aufgebracht wird. Statt der "flattening layer" wird in einer alternativen Ausführungsform auch ein mechanischer Polierprozeß erwähnt. Die "flattening layer" wird nach Ausbildung der Poren entfernt.

Ein weiteres Beispiel ist in dem Patent US 5,753,014 beschrieben. Hier werden ein Membranfilter und ein Verfahren zu dessen Herstellung beschrieben, bei dem der makroporöse Träger auch aus einem anorganischen Material, wie z.B. Si, SiC, Al₂O₃ etc., bestehen kann. Die Membran kann auch hier aus Polytetrafluorethylen (PTEE), Si, C, Si₃N₄, ZiO, Al₂O₃, einem Metall oder z.B. Stahl bestehen. Auch bei diesem Verfahren werden die Poren in die Membranschicht geätzt mit Hilfe von Techniken, wie sie z.B. aus der Halbleitertechnik seit langem bekannt sind. Nach Ausbildung der Poren wird durch vollständiges rückseitiges Ätzen der Trägerschicht die Membran freigelegt. In einer alternativen Ausführungsform kann die Trägerstruktur auch vor der Herstellung der Membran gebildet werden. Zur Verringerung der Spannungsbeanspruchung zwischen Membranschicht und Träger sowie deren besseren Verbindung wird ggf. eine Zwischenschicht, wie z. B. Borax, Chrom, Nickel o.ä., genutzt. In diesem Patent wird auch ein Porenfüllmaterial, wie z.B. Polysilicium, Aluminium etc. , beschrieben, das am Ende wieder entfernt werden muß. In einer Ausführungsform wird mittels eines Druckverfahrens ("imprint"- und "lift-off"-Technik) mit Hilfe einer Druckform eine Polyamidschicht als Maskenschicht für die Membranschicht strukturiert oder in einer anderen Ausführungsform die strukturierte Polyamidschicht selbst als Membranschicht genutzt.

Bei der US 5,139,624 werden die Poren naßchemisch hergestellt.

Die EP 0 879 635 A1 beschreibt ein Membranfilter mit einer Membranschicht aus Siliziumnitrit, in die mit einem photolithographischen Prozeß Poren eingebracht werden. Zur Erhöhung der mechanischen Festigkeit werden die Poren in separate Segmente untergebracht, die durch einen ebenen Träger mit einer Dicke umgrenzt werden, die wesentlich größer ist als die der Membran.

Die WO 01/36321 A1 beschreibt ein Membranfilter, in das durch verschiedene Ätztechniken Filterporen in ein Substrat eingebracht werden.

Allgemein ist zu bemerken, daß Filterelemente aus mindestens 2 Schichten (einer Trägerschicht und einer Membranschicht) das Problem haben, daß die Beschichtungsverfahren meist überwiegend oder vollständig amorphe Schichten liefern, was für die mechanische Festigkeit nachteilig ist.

Derzeit oft als Membranschicht genutztes Material ist Si₃N₄. Der Stand der Technik zeigt aber, daß eine über größere Kristallkeime hinausgehende innere kristalline Struktur der Si₃N₄-Membranschicht bei Temperaturen unterhalb etwa 1400°C bislang kaum erreicht werden kann. Der aktuelle Stand liegt auf Labor- und Experimentniveau. Die Trägerstrukturen der Filterelemente bestehen meist aus Si, dessen Schmelztemperatur bei 1420°C liegt. Das zur Erzeugung eines hohen kristallinen Anteils notwendige Erhitzen/Glühen von Si₃N₄ würde daher die Trägerstruktur schädigen oder gar zerstören.

Die Herstellung sehr dünner Membranen (< 1 µm) bei Porendurchmessern von < 1 µm, die allerdings gegen verhältnismäßig hohe Drücke (> 1 bar) stabil sind, ist mit Hilfe der bisher bekannten Verfahren schwierig und ausschußanfällig. Die Beschränkung bzgl. der Druckbelastbarkeit, die auch mit der jeweiligen Porosität und Membrandicke zusammenhängt, macht die Filtration mit hohem Durchsatz teuer.

Aufgabe der vorliegenden Erfindung ist, einen Membranfilter und ein Verfahren zu dessen Herstellung zu schaffen, die die oben erwähnten Nachteile vermeiden. Insbesondere soll ein Filterelement geschaffen werden, das bei hohem Durchsatz mechanisch stabil ist und Druckbelastungen einschließlich Druckschwankungen über eine lange Standzeit aushält.

Diese Aufgabe wird durch die in den Patentansprüche 1 und 24 angegebenen Merkmale gelöst. Vorteilhafte Ausgestaltungen und Weiterbildungen der Erfindung sind den Unteransprüchen zu entnehmen.

Eine Verbesserung der mechanischen Belastbarkeit des Filterelements kann erreicht werden durch:
1. eine günstige Geometrie der Membran,
2. eine Erhöhung der mechanischen Belastbarkeit bzw. der Festigkeit des Membranmaterials durch
   2.1. eine innere Vorspannung der Membran und
   2.2. Kristallstrukturen im Membranmaterial, sowie
3. Verdichten des Membranmaterials.

Eine generelle Lösung besteht darin, die Membranschicht aus einem Material herzustellen, das bei Temperaturen unterhalb der Schmelztemperatur des Trägermaterials (im Fall von Si unterhalb von ca. 1400°C) einen ausreichend hohen kristallinen Anteil (> 50%) erreicht. Hierfür bietet sich (insbesondere) SiC an.

Bei Si₃N₄ setzt bei verhältnismäßig hohen Temperaturen Kristallbildung ein. So kann bei einer Temperatur oberhalb ca. 1400°C ein Kristallisationsgrad von über 90% beobachtet werden. Angesichts der damit vergleichbaren Schmelztemperatur des Si-Trägermaterials muß die Kristallbildung bei einer niedrigeren Temperatur, möglichst unterhalb von ca. 1350°C, initiiert und bis zu einem ausreichenden Kristallisationsgrad vorgenommen werden. Für Si₃N₄ stehen dabei einige Verfahren zur Verfügung. Den wichtigsten dieser Verfahren ist gemeinsam, daß in den wachsenden Beschichtungsfilm zusätzliche Energie eingebracht wird.

Zu diesen Verfahren gehören u.a. die Beschichtung mit Ionenbeschuß (vorzugsweise mit Ar-Ionen) bzw. Magnetron-Sputterverfahren, Beschichtungsverfahren in Kombination mit einer Hochfrequenzeinkopplung sowie ein weiteres vorteilhaftes Beschichtungsverfahren, das als HW-CVD-Verfahren (engl. hot wire CVD) oder auch Cat-CVD-Verfahren (engl. catalytic CVD) bezeichnet wird. Einzelheit der verschiedenen Beschichtungsverfahren werden weiter unten näher erläutert.

Nach Anwendung dieser Verfahren ist meist eine z.B. thermische Nachbehandlung erforderlich, um den geringen Kristallisationsgrad (Kristallkeime) auf den erforderlichen Wert zu erhöhen. Dazu wird das beschichtete Substrat auf Temperaturen oberhalb 1000°C für z.T. mehrere Stunden erhitzt.

Diese Vorgehensweise ist aufwendig (für Si als Trägermaterial), kostenintensiv, erfordert z.T. neuartige und damit teuere Beschichtungsanlagen oder gar die Weiterentwicklung bestehender Beschichtungsanlagen.

Eine weitere Möglichkeit zur Erzeugung mechanisch stabiler dünner Schichten ist der Übergang zu einem anderen Beschichtungsmaterial, das eine niedrigere Kristallbildungstemperatur hat und sich entsprechend dem gleichen, oben beschriebenen Herstellungsverfahren für ein Filterelement verarbeiten läßt. Ein solches Material ist Siliciumcarbid (SiC).

Bei SiC setzt die Kristallbildung schon bei ca. 400°C ein; bei Temperaturen über 1000°C wird bei ausreichend langer Behandlungszeit ein Kristallanteil von über 85% erwartet. Der E-Modul von SiC liegt bei ca. 300 GPa und kann nach einer derartigen Behandlung ca. 370-430 GPa und Biegefestigkeitswerte von über 1000 MPa erreichen. Es können Kristalle mit Abmessungen zwischen wenigen Nanometern, z.B. 5 nm, bis über 50 nm gebildet werden, was für das Ziel der Erhöhung der mechanischen Festigkeit und Hemmung der Rißbildung und Bausbreitung vorteilhaft ist.

Eine weitere Verbesserung läßt sich durch Aufbringen einer (späteren) Membranschicht aus einem Verbund aus z.B. SiC und Si₃N₄ erzielen. Auch mit solchen Verbundsystemen lassen sich Biegefestigkeitswerte von deutlich über 1100 MPa erzielen.

Das Verfahren zur Herstellung des Filterelements besteht aus den folgenden Schritten:
S1) Aufbringen einer Membranschicht auf ein Trägersubstrat,
S2) Ätzen einer Membrankammer auf der der Membranschicht gegenüberliegenden Seite des Trägersubstrats, so daß noch eine Restschicht des Trägersubstrats verbleibt,
S3) Erzeugen von Poren in der Membranschicht mittels eines Lithographie- und Ätzverfahrens zur Schaffung einer perforierten Membran,
S4) Entfernen der Restschicht durch Ätzen zum Freilegen der Membranschicht,
S5) wobei die Membranschicht während Schritt S1 oder in einem späteren Schritt einer zusätzlichen Behandlung zur Erhöhung der mechanischen Festigkeit ausgesetzt wird.

Wie erwähnt, kann die mechanische Belastbarkeit des Membranmaterials (neben einer günstigen Wahl der Geometrie der Membran, die später besprochen wird) durch Verdichtung des Membranmaterials, Erzeugung einer inneren Vorspannung und/oder von Kristallstrukturen im Membranmaterial erhöht werden.

In einem Ausführungsbeispiel wird die erhöhte Festigkeit dadurch erreicht, daß die Membranschicht eine innere mechanische Vorspannung aufweist. Die Membranschicht ist sozusagen mit dieser Vorspannung über der Membrankammer gespannt und kann dadurch höhere Drücke senkrecht zu ihrer Oberfläche aufnehmen.

Die Vorspannung der Membranschicht wird z.B. durch das verwendete Beschichtungsverfahren zur Aufbringung der Membranschicht (aus z.B. Si₃N₄ oder SiC) bestimmt. Besonders geeignet hierfür sind in der Technik bekannte LPCVD-Verfahren ("low pressure chemical vapour deposition"), die bei geringen Prozeßdrücken von 10 bis 100 Pa und Temperaturen im Bereich von ca. 400°C - 900°C gefahren werden.

Die innere Vorspannung der Membran reduziert die sog. van-Mises-Spannung in der Membran bei Druckbelastungen der Membran wesentlich; in einem Ausführungsbeispiel um ca. 80% der voreingestellten Membranspannung. Darüber hinaus reduziert die innere Vorspannung der Membran auch die bei Druckbelastungen auftretenden Dehnungen in der Membran. Die Vorspannung der Membran soll größer ca. 10 MPa, vorzugsweise größer 100 MPa sein.

In einem anderen Ausführungsbeispiel weist die Membranschicht Nano- und/oder Mikrokristallstrukturen auf.

Die Erzeugung von Kristallstrukturen kann auf mehreren Wegen erfolgen. Bei vielen Beschichtungsverfahren wird die Beschichtung in praktisch vollkommen amorpher Form auf dem Träger aufgebracht; bei einigen Verfahren können allerdings auch während der Beschichtung zumindest Kristallkeime erzeugt werden, die für eine spätere Behandlung (gemäß Schritt S5) besonders vorteilhaft sind.

Besonders geeignete Beschichtungsverfahren zur Erzeugung dünner Schichten werden zunächst grob in sogenannte CVD-(chemical vapour deposition) und PVD-Verfahren (physical vapour deposition) unterteilt. Bei CVD-Verfahren werden durch chemische Reaktion (z.B. thermische Zersetzung bei hohen Temperaturen) aus der Gasphase dünne Schichten aus einem aus der Gasphase entstandenem Festkörpermaterial auf einem Substrat abgeschieden. Bei CVD-Verfahren ist daher die Existenz gasförmiger Verbindungen Voraussetzung, so daß diese miteinander reagieren können, wobei eines der Reaktionsprodukte der zur Beschichtung genutzte Stoff ist. Alle anderen Reaktionsprodukte sind gasförmig und können daher leicht abtransportiert werden.

Die CVD-Verfahren lassen sich in weitere spezielle, im Stand der Technik bekannte CVD-Verfahren gliedern, wie z.B. APCV-Prozesse (atmospheric pressure CVD), LPCVD-Prozesse (low pressure CVD) mit Drücken von 10 bis 100 Pa, RPCVD (reduced pressure vapour phase epitaxie) bei Drücken zwischen 1 und 10 kPa, PECVD-prozesse (plasma induced CVD), Laser-induzierte CVD sowie reaktive Varianten der Sputter-Technik und Bedampfungstechnik.

Bei PVD-Verfahren findet die Beschichtung eines Substrats durch Niederschlag eines Dampfes auf dem Substrat statt, wobei der Dampf physikalisch (durch z.B. Verdampfen, Kathodenzerstäubung bzw. Sputtern, Molekularstrahlepitaxie) erzeugt wird. Ein PVD-Prozeß weist im wesentlichen die drei Phasen Erzeugung von Partikel, Transport der Partikel und Abscheidung bzw. Kondensation der Partikel auf dem Substrat auf. Eine wesentliche Eigenschaft von PVD-Prozessen sind die Hochvakua (10⁻⁸-10 Pa), in denen die PVD-Prozesse gefahren werden.

Während der Aufbringung des Membranmaterials kann eine geeignete, zumindest geringe Ausbildung von Kristallstrukturen bzw. Kristallisationskeimen initiiert und gefördert werden.

Bei CVD-Verfahren nimmt mit steigender Träger- bzw. Substrattemperatur bekanntermaßen der Anteil an Kristallstrukturen in der abgeschiedenen Schicht zu (z.B. beim LPCVD-Verfahren bei Temperaturen über 400°C). Bei PECVD-Verfahren kann die Substrattemperatur bis auf ca. 1350°C erhöht und eine kristalline Membranschicht (z.B. aus SiC) mit einem Kristallisationsgrad von über 75%, in besonderen Fällen nahezu 100% geschaffen werden.

Eine weitere Möglichkeit zur Erzeugung von zumindest Kristallisationskeimen schon bei der Beschichtung (aber auch danach) ist der Beschuß des Substrats mit Ionen, z.B. Ar-Ionen. Der Ionenbeschuß erfolgt dabei bei Temperaturen von einigen hundert °C. Die auftreffenden Ionen deponieren ihre Energie in den Auftreffstellen. Weitere bekannte Maßnahmen zur Unterstützung der Bildung von Kristallkeimen sind neben dem Ionenbeschuß eine Laserbestrahlung sowie eine Einstrahlung elektromagnetischer Strahlung wie z.B. Radiowellen (z.B. Magnetron-Sputtern bei 13,65 MHz) . Dieser beschriebene Eintrag von Energie in das Membranmaterial fördert ebenfalls die Ausbildung von Kristallisationskeimen bei niedrigeren Temperaturen.

Beim HWCVD-Verfahren wird die Entstehung von Kristallisationskeimen im Membranmaterial auch bei niedrigeren CVD-Beschichtungstemperaturen initiiert und deutlich verstärkt. Beim HWCVD-Verfahren erzeugen sehr heiße (Temperatur größer 1800°C) Tantaldrähte in einer Reaktionskammer nahe der zu beschichtenden Oberfläche freie Radikale von Silan (SiH₄) und Ammoniakteilchen (NH₃), die im Beschichtungsmaterial als Kristallisationskeime dienen und zwar auch für eventuelle weitere Behandlungsschritte.

Nach Aufbringung des Membranmaterials auf den Träger kann der kristalline Anteil durch folgende Maßnahmen ebenfalls weiter deutlich erhöht werden:
a) Sintern unter Druck oder nahezu drucklos
b) Ionenbeschuß
c) isostatisches Heißpressen
d) eine Kombination von a), b) und c).

In einer Ausführungsform des erfindungsgemäßen Verfahrens zur Herstellung von Filterelementen wird die auf die Trägerstruktur aufgebrachte (spätere) Membranschicht durch Energieeintrag (z.B. Erhöhen der Temperatur) gesintert. Beispielsweise beginnt im Fall einer Si₃N₄-Membranschicht bei Temperaturen bei ca. 1450°C Kornwachstum, gefördert durch evtl. schon vorhandene Kristallisationskeime, einzusetzen. Dabei bilden sich längliche Si₃N₄-Körner, sog. β-Si₃N₄. Die Korngrößen liegen dabei im Bereich von ca. 20-50 µm. Mit steigender Temperatur sowie zunehmender Heizzeit nimmt der β-Si₃N₄-Anteil schnell zu und erreicht oberhalb von ca. 1750°C über 90%. Mit dem Sintervorgang geht aufgrund einer Volumenminderung an den Korngrenzen eine Verdichtung der Si₃N₄-Schicht einher. Oberhalb von ca. 1500°C kann die Dichte bis zu 90 % des theoretisch möglichen Wertes erreichen.

Während des Sintervorgangs können Sinterhilfsmittel, wie z.B. Al₂O₃ und/oder Y₂O₃ (z.B. jeweils ca. 5 Gew.-%), zugesetzt werden.

In einer anderen Ausführungsform erfolgt die Heizung des α-Si₃N₄ mittels elektromagnetischer Strahlung, z.B. Mikrowellen (oberhalb von z.B. 25 GHz) oder Radiowellen. Ein wesentlicher Vorteil des Sinterns mit elektromagnetischer Strahlung ist, daß die Energie nahezu im gesamten Probenvolumen deponiert wird und nicht wie im herkömmlichen Fall mittels Wärmeleitung von der Oberfläche bzw. Kornoberfläche ins Volumen gelangt. Die Sinterhilfsmittel unterstützen die Energieeinkopplung noch. Bei dieser Variante setzt das Kornwachstum verglichen mit dem vorher beschriebenen herkömmlichen Sinterverfahren bei ca. 100-150°C niedrigeren Temperaturen ein. So beginnt das Kornwachstum hier schon bei ca. 1350°C, und bei ca. 1600°C liegt Si₃N₄ zu über 90% in kristalliner Form vor. Auch die Verdichtung setzt bei entsprechend niedrigeren Temperaturen ein und ist bei einem Maximalwert von über 90% abgeschlossen. Das Strahlungsmaximum liegt vorzugsweise in der Nähe mindestens eines Maximums der Absorptionskurve des Beschichtungsmaterials.

Bei der Ausbildung der kristallinen Phase ist darauf zu achten, daß ein gewisser amorpher Restabteil (von z.B. höchstens 10%) in der Si₃N₄-Schicht verbleibt, da ansonsten die Körner der β-Phase zu groß werden und letztendlich die Schicht wieder spröde wird.

Wird als Beschichtungsmaterial für die spätere Membranschicht SiC gewählt, kann der Sintervorgang bei deutlich niedrigeren Temperaturen (auch unterhalb 1400°C) mit einer ausgeprägten Bildung von Kristallkörnern durchgeführt werden. Es ist davon auszugehen, daß schon bei Temperaturen ab 900°C ein Kristallisationsgrad von mindestens 10% erreicht wird. Eine längere Sinterzeit trägt ebenfalls zu höheren Kristallisationsgraden bei. Damit kann eine mechanisch hochstabile Membranschicht auch auf einer Trägerstruktur aus Silicium erzeugt werden.

Der Effekt eines derartigen Sintervorgangs auf die mechanische Festigkeit der Membranschicht ist u.a. einer deutliche Erhöhung der Zugfestigkeit. Für nicht gesintertes Si₃N₄ liegt z.B. die Zugfestigkeit bei 500-600 MPa, während sie nach dem Sintern über 1100 MPa beträgt. Dies erklärt die deutliche Erhöhung der Druckstabilität der Membranschicht.

In einer weiteren Ausführungsform kann durch z.B. isostatisches Heiß-Pressen die Membranschicht weiter verdichtet werden. Der Preßvorgang wird z.B. bei Temperaturen von über 750°C und Drücken von über 100 bar durchgeführt. Dieser Prozeß kann auch nach einer Sinterbehandlung erfolgen. Die Kornstrukturen bleiben dabei nahezu unverändert, jedoch nimmt die Porosität deutlich ab, und die Zugfestigkeit kann auf Wert von über 1100 MPa ansteigen.

Die beschriebenen Sinterbehandlungen können entweder vor oder nach der Strukturierung (Ausbildung der Poren) der Membranschicht vorgenommen werden.

Das isostatische Heiß-Pressen wird an der nicht strukturierten Membranschicht durchgeführt.

Die Dicke der Membran ist kleiner 50 µm, vorzugsweise kleiner 1 µm.

Die Porendurchmesser sind kleiner 50 µm und vorzugsweise kleiner 1 µm. Eine "Elementarzelle" (= eine Flächeneinheit der Membran mit einer Pore) hat eine Fläche größer/gleich (Porendurchmesser)².

Die wesentlichen Eigenschaften des Filterelements sind:
- eine relativ dünne freitragende Membran mit kleinem Aspektverhältnis (Membrandicke : Porendurchmesser) [-> hoher Durchsatz] sowie
- eine relativ hohe mechanische Festigkeit bzw. Druckstabilität.

Hierfür sind folgenden Verfahrensschritte entscheidend:
- das Ätzen in mehreren Schritten, wobei für die Ausbildung der Poren in der Membranschcht eine Restschicht der Trägerstruktur (hier z.B. Si-Schicht) vorerst stehengelassen wird und diese erst nach der Porenbildung (mit oder ohne Zwischenstützstrukturen) entfernt wird sowie
- die Ausbildung einer kristallinen Struktur des Membranschichtmaterials, was die Rißbildung bzw. das Rißwachstum stark hemmt und die Zugfestigkeit sehr erhöht. Dies geschieht außer durch eine geeignete Wahl der Verfahrensparameter für die Beschichtungsprozesse (Temperatur, Verfahrensdruck usw.) durch Sinterprozesse und/oder isostatisches (Heiß-)Pressen. Hierbei ist noch anzumerken, daß u.U. die oder weitere Sinterschritte auch nach der Porenbildung in der Membran durchgeführt werden können.

Die innere Vorspannung der Membran reduziert die interne van-Mises-Vergleichsspannung und damit Biegebelastungen in der Membranschicht (in einigen Modellfällen um ca. 300 MPa). Für die Herstellung unserer Filterelemente ist zunächst die Ausbildung kristalliner Strukturen entscheidend. Eine gewisse geringe Vorspannung in der Membranschicht ist (1) bei freitragender Membran notwendig (zu deren "Straffung") und (2) je nach Verfahrensparameter der Beschichtungsprozesse eine nützliche "Begleiterscheinung" (oft ca. 100 MPa oder höher).

Es ist zu erwähnen, daß der Schritt (nach dem Ausbilden der Poren in der Membranschicht), bei dem die Restschicht der Si-Trägerstruktur entfernt wird, nicht nur (wie bisher beschrieben) durch einen weiteren Ätzangriff von der Rückseite (der Seite der Trägerstruktur), sondern auch durch die ausgebildeten Poren von der Membranseite aus durchgeführt werden kann. Hierbei findet dann unterhalb der perforierten Membranschicht eine Unterätzung statt, bei der die Restschicht entfernt und somit die perforierte Membran freigelegt wird. Die hierfür genutzten Ätzmittel sollen die Membranschicht natürlich nicht angreifen. In Frage kommen hierfür u.a. Trockenätzprozesse mit z.B. SF₆, CCl₂F₂ + O₂, NF₃ und Mischungen von isotrop und anisotrop ätzenden Stoffen.

Durch das Si-Tiefenätzen werden Membrankammern geschaffen, die von je einer freitragenden Membran überspannt werden. Die Umfangsform der Membrankammern ist grundsätzlich nicht beschränkt. So sind quadratische, rechteckige, rautenförmige Konturen etc. der Membrankammern herstellbar. Allerdings sind die Abmessungen der Membrankammern durch die allgemeine Stabilität des gesamten Filterelements bestimmt, die im wesentlichen durch die Si-Trägerstruktur gegeben ist.

Bei geeigneter Wahl des Si-Substrats können die Flanken der Membrankammern (im Querschnitt betrachtet) senkrecht (z.B. (110)-Si) oder schräg (z.B. (100)-Si) ausgebildet werden.

Festigkeitsuntersuchungen zeigen auch, daß die Druckbelastbarkeit der Membran im wesentlichen von nur einer Seitenlänge der Membran beeinflußt wird. Daher werden in einer bevorzugten Ausführungsform die Membrankammern als lange Schlitze ausgebildet, da vor allem die kleine Seitenlänge die Druckstabilität und das Bruchverhalten der Membran beeinflußt. Die Spannweiten in dieser Richtung liegen in einer Ausführungsform vorzugsweise in der Größenordnung von etwa 100 µm. Die große Seitenlänge ist im wesentlichen - mit Ausnahme der allgemeinen Stabilität des gesamten Filterelements - nicht beschränkt. So kann sich die schlitzförmige Membrankammer im Prinzip bis über die gesamte Länge des Filterelements erstrecken, was zur Porosität des Filterelements positiv beiträgt.

In weiteren Ausführungsformen kann das Si-Tiefenätzen in mehr als zwei Schritten durchgeführt werden, um z.B. bei größeren Membranspannweiten und/oder höherer Porosität Zwischenstützstrukturen einzubauen. Dabei kann im ersten Schritt des Si-Tiefenätzens eine größere Grundfläche der späteren Membrankammer strukturiert bzw. geätzt werden, wobei auch hier wieder eine Restschicht des Si-Trägermaterials zunächst stehengelassen wird. In einem möglichen Verfahren wird nun wie beschrieben die Membran auf der Vorderseite gebildet. Anschließend wird die Restschicht des Si-Trägers auf der Rückseite mit einer Maskenschicht (z.B. Photolack) beschichtet, die danach durch entsprechende Lithographie-Verfahren strukturiert wird. Die so geschaffene Struktur in der Maskenschicht wird im Anschluß daran genutzt, um die durch die strukturierte Maskenschicht zugängliche Restschicht des Si-Trägers durch Ätzung zu entfernen. Die durch die strukturierte Maskenschicht vor der Ätzung geschützten Teile der Restschicht des Si-Trägermaterials bilden nun Zwischenstützstrukturen, die die Stabilität der Membran in der größeren Membrankammer verbessern. Durch diese Ausführungsform kann die Porosität des Filterelements (durch Vergrößerung der Membrankammerfläche) erheblich gesteigert werden.

Dieses Mehrschrittverfahren zur Si-Tiefenätzung kann nach Bedarf gemäß dem gleichen Prinzip auf mehr als die hierin beschriebenen zwei oder drei Ätzschritte ausgedehnt werden. Das Ausführen des ersten Schritts der Si-Tiefenätzung vor der Herstellung der Membran verbessert die Parallelisierbarkeit des Fertigungsprozesses für das Filterelement und damit die Wirtschaftlichkeit.

Ein weiterer Vorteil des Mehrschrittverfahrens für die Si-Tiefenätzung ist, daß die vorübergehend vorhandene Restschicht des Si-Trägermaterials die Spannungen in der Membran gut aufnehmen und ableiten kann, was insbesondere bei Membranschichten mit innerer Vorspannung und/oder z.B. bei Vorhandensein von zusätzlichen temporär vorhandenen Zwischenschichten (z.B. metallische Opferschichten, wie NiCr, Cu usw.) von Bedeutung ist. Darüber hinaus nimmt diese Restschicht in der Membranschicht temporär auftretende Spannungen auf, die bei der Porenbildung in der Membran entstehen können, da bei der Porenätzung nicht alle Poren gleichzeitig geöffnet werden. Außerdem verbessert die Restschicht die Handhabbarkeit der gesamten Filterelementstruktur während der Filterherstellung. A11 dies reduziert den Ausschuß erheblich.

Ein weiterer Vorteil (neben u. a. der Parallelisierbarkeit des Prozeßschritts) einer rückseitigen Ätzung vor Ausbildung der Poren in der Membran ist, daß auf diese Weise verhältnismäßig einfach eine Hierarchie von Zwischenstützen geschaffen werden kann.

Beim letzten Ätzschritt zum Freilegen der perforierten Membranschicht wird die Membranseite des Filterelements in der Regel vor dem Ätzmittel geschützt. Dies geschieht z.B. durch die Verwendung einer sogenannten "Ätzdose", welche die Vorderseite (= Membranseite) der Struktur bedeckt. Eine andere Möglichkeit ist, die Vorderseite mit der perforierten Membran durch ein Mittel, wie z.B. A1, zu bedecken, das auch zumindest teilweise die Poren füllt. Dadurch wird z.B. verhindert, daß bei letzten Ätzschritt entstehender Wasserstoff die Membranschicht zerstört oder die ausgebildete Membranschicht vom Ätzmedium angegriffen und verändert wird. Der Druck von Wasserstoff oder allgemein einer Gasblase in Poren mit einem Durchmesser d genügt der Faustformel P ≅ 3,5 bar / d_{1µm}, d.h. bei d = 1 herrscht in der Pore ein Druck von ca. 3, 5 bar, bei d = 0,5 ein Druck von 7 bar! Auch diese Maßnahme senkt den Ausschuß bei der Herstellung der Filterelemente erheblich.

Im folgenden wird nun eine Ausführungsform des Verfahrens zur Herstellung eines erfindungsgemäßen Filterelements beschrieben. Es zeigen:
- Fig. 1: einen Querschnitt eines Membranelements nach dem ersten Verfahrensschritt;
- Fig. 2: einen Querschnitt eines Membranelements nach dem zweiten Verfahrensschritt;
- Fig. 3: einen Querschnitt eines Membranelements nach dem dritten Verfahrensschritt;
- Fig. 4: einen Querschnitt eines Ausführungsbeispiels nach dem dritten und vor dem vierten Verfahrensschritt des Anspruchs 1; und
- Fig. 5: einen Querschnitt des Ausführungsbeispiels nach dem vierten Verfahrensschritt.

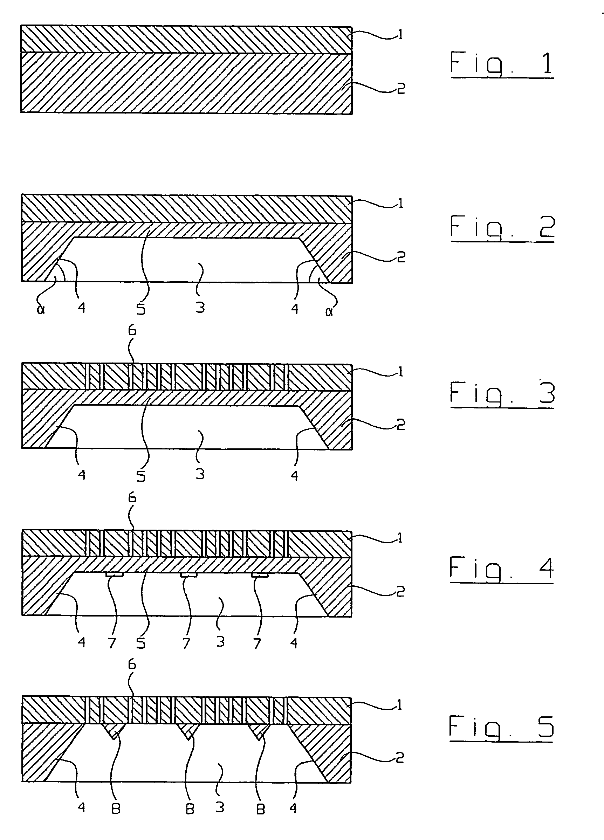

Im ersten Verfahrensschritt wird gemäß Fig. 1 eine Membranschicht 1 auf eine Trägerschicht 2 aufgebracht. Die Trägerschicht 2 ist dabei beispielsweise ein Si-Substrat. Das Aufbringen der Membranschicht 1, die beispielsweise aus Si₃N₄, SiC oder einer Kombination dieser Stoffe besteht, erfolgt vorzugsweise mittels CVD-Verfahren (wie z.B. LPCVD oder PECVD) oder PVD-Verfahren (wie z.B. Sputtern). Im dargestellten Ausführungsbeispiel erfolgt dies einseitig. Es kann aber auch zweiseitig erfolgen. Die Dicke der Membranschicht kann beispielsweise 500 nm oder mehr betragen. Die Trägerschicht 2 kann ein herkömmlicher Si-Wafer sein, wie er aus der Halbleiterindustrie bekannt ist.

Im zweiten Schritt wird gemäß Fig. 2 auf der Rückseite, also der der Membranschicht 1 gegenüberliegenden Seite der Trägerschicht, ein Si-Tiefenätzen durchgeführt. Hierzu wird zunächst die Rückseite mit einer Resistschicht (z.B. einem bekannten Photolack) beschichtet, die anschließend vorzugsweise mit Hilfe von Photolithographie strukturiert wird. Mittels z.B. RIE-Trockenätzen wird die Struktur in der Resistschicht in die darunter liegende Schicht übertragen. Im Fall beidseitig (mit Si₃N₄ oder SiC) beschichteter Substrate ist dies die Si₃N₄- oder SiC-Beschichtung, die auf der der späteren Membranseite gegenüberliegenden Seite vorhanden ist. Nach der Übertragung der Resiststruktur in die rückseitige Beschichtung schließt sich das eigentliche Si-Tiefenätzenmit z.B. NaOH (NaOH-Naßätzen z.B. bei 80°C; Ätzzeit ca. 7-8 Stunden) an. Ist das Substrat nur einseitig (auf der Seite der späteren Membran) beschichtet, erfolgt die NaOH-Naßätzen unmittelbar nach der Resiststrukturierung. Dieses naßchemische Ätzen zeigt eine starke Richtungsabhängigkeit der Ätzraten in Bezug auf die Kristallrichtung des Substrats. Sog. {111}-Flächen werden ca. 100-mal langsamer geätzt als andere Flächen, was bei einem (100) -Si-Wafer schräge Flanken 4 mit einem Winkel α von 54, 76° bei (100) -Si liefert. Bei (110)-Si sind die Flanken steiler, d.h. im wesentlichen vertikal. Die Ätzrate liegt bei ca. 1 µm / Minute. Dieser Ätzschritt wird in einer Ausführungsform bei einer Restdicke der Si-Trägerschicht von ca. 30 µm gestoppt, so daß eine Restschicht 5 stehen bleibt. Bei diesem Schritt dünnt sich übrigens die Beschichtung (Si₃N₄ oder SiC) ab auf z.B. ca. 600-800 nm.

Im dritten Hauptschritt (S3) wird zunächst eine sog. metallische Opferschicht, wie z.B. NiCr, Cu etc., in einer Dicke von der Größenordnung 150 nm aufgebracht, die bei der Strukturierung der eigentlichen Membranschicht (Si₃N₄- oder SiC-Schicht) als Ätzmaske dienen wird. Zur Verbesserungen der Justierbarkeit des gesamten Wafers kann dann z.B. Gold (Au) aufgetragen und photolithographisch und naßchemisch - wie bekannt - z.B. zu Kreuzen oder ähnlichen Markierungen strukturiert werden. Diese Markierungen weisen ein hohes Kontrastvermögen auf, wodurch der Wafer besser positioniert werden kann. In der üblichen Weise wird nun eine aufgebrachte, z.B. ca. 500 nm dicke getemperte Lackschicht lithographisch zu dem gewünschten Porenmuster strukturiert.

Die Übertragung des Porenmusters in die Membranschicht (aus z.B. Si₃N₄ oder SiC) erfolgt in einer Ausführungsform in zwei Trockenätz-Schritten: im ersten Teilschritt (S3-1) wird mittels z.B. Ar-IBE (Ar Beam Ion Etching) die Lackstruktur in die metallische Operschicht übertragen und im zweiten Teilschritt (S3-2) wird z.B. mittels ECR-RIE (Ätzgas z.B. CF₄/O₂) die Porenstruktur in der metallischen Opferschicht in die Membranschicht übertragen (vgl. Fig. 3). Je nach apparativen oder sonstigen Verfahrensgegebenheiten können andere bekannte Ätztechniken genutzt werden.

Im vierten Hauptschritt (S4) wird nun das rückseitige Si-Tiefenätzen abgeschlossen, d.h. die Restschicht 5, die in diesem Fall ca. 30 µm beträgt, wird entfernt, um die Membranschicht 3 von unten freizulegen. Dabei kann zunächst die restliche metallische Opferschicht aus dem Hauptschritt S3 entfernt werden, um die Einleitung etwaiger Spannungen von dieser Opferschicht in die Membran zu vermeiden. Dieser Si-Tiefenätzschritt wird z.B. mit TMAH (Tetramethylammoniumhydroxid) bei ca. 80°C und in einer Ätzspanne von ca. 1 Stunde durchgeführt, weil TMAH die Membranschicht weniger angreift als NaOH. Andere bekannte Ätzverfahren sind natürlich ebenfalls anwendbar.

Bei Porendurchmessern unterhalb ca. 1 µm kann die auftretende Gasbildung bei diesem Ätzschritt zum Zerreißen der Membran führen. Daher wird in einer Ausführungsform die Membran mit Hilfe einer sog. "Ätzdose" vor dem Ätzmedium geschützt. Hierzu wird die Membranseite des Wafers dicht mit einem z.B. pertrischalenartigen Behälter verbunden. In einer weiteren Ausführungsform werden die Poren mit einem Material, wie z.B. A1, verfüllt (und dabei auch die Vorderseite der Membran bedeckt), um das Zerreißen durch Gasbildung zu vermeiden. Nach Beendigung des Si-Tiefenätzens wird dieses Material, z.B. durch ein anderes Ätzverfahren, sonstige chemische Behandlung oder z.B. einfaches Erhitzen, von der Vorderseite der Membran und aus den Poren entfernt.

Während des ersten Schrittes S1 oder bei einem späteren Schritt wird die Membranschicht einer separaten Behandlung (nämlich einer Druck-, Ionenbeschuß- und/oder Wärmebehandlung) unterzogen. Vorzugsweise erfolgen die Ionenbeschuß-und/oder Wärmebehandlung gleichzeitig mit dem Aufbringen der Membranschicht, also im Schritt S1, oder zu einem späteren Zeitpunkt, wie beispielsweise erst nach dem Schritt S4. Isostatisches Heiß-Pressen wird vorzugsweise zwischen den Schritten S1 und S2 ausgeführt.

Zum Abschluß werden die auf dem Wafer noch vereinigten Filterelemente, z.B. durch übliches Sägen oder Brechen, entlang vorher durch z.B. Ätzung geschaffenen Bruchkanten (Sollbruchstellen) vereinzelt.

Die Membrankammern 3 können - wie schon erwähnt - von der Rückseite aus betrachtet viele verschiedene Konturen aufweisen. In einer bevorzugten Ausführungsform hat die Membrankammer die Form eines langen Schlitzes, der zum größten Teil von einer Membran überspannt wird. Ein Kammerschlitz hat in einer Ausführungsform z.B. eine Länge von ca. 2100 µm und eine Breite von 100 µm.

Um die Porosität bzw. Membranfläche pro Filterelement zu erhöhen, können gemäß einer Ausführungsform Hauptmembrankammern größerer Breite (> 100 µm) geschaffen werden, indem in Abständen von ca. 100 µm kleinere Zwischenstützen 8 eingefügt werden. Dies kann geschehen, indem der Schritt S2 über eine größere Fläche durchgeführt wird. Danach wird dieses Si-Tiefenätzen gestoppt, diese Restschicht, die auch eine größere Dicke als die oben genannten 30 µm aufweisen kann, wiederum geeignet (mit oder ohne eine dünne metallische Opferschicht) strukturiert wird usw. Dies kann im Prinzip mehrfach wiederholt werden (Schritte S2-i, i = 1 ... n), um zunehmend komplexer gestaltete Zwischenstützen zu erzeugen. Es ist jedoch vorzuziehen, daß aus den schon genannten Gründen vor Ausbildung der Poren 6 stets eine Restschicht 5 bestehen bleibt, die erst zuletzt entfernt wird.

Aufgrund der besonderen Festigkeit einer SiC-Membranschicht kann bei in etwa gleichem Aspektverhältnis (statt 0,45 µm Porendurchmesser : 0,80 µm Membrandicke beispielsweise 0,2 µm (oder kleiner) : 0,4 µm (oder kleiner)) eine Membran mit Porendurchmessern < 0,4 µm einfacher und mit guter Ausbeute erzeugt werden.

## Patentansprüche

1. Verfahren zur Herstellung eines Filterelements mit den aufeinanderfolgenden Schritten:
S1) Aufbringen einer Membranschicht auf ein Trägersubstrat,
S2) Ätzen einer Membrankammer auf der der Membranschicht gegenüberliegenden Seite des Trägersubstrats, so daß noch eine Restschicht des Trägersubstrats verbleibt,
S3) Erzeugen von Poren in der Membranschicht mittels eines Lithographie- und Ätzverfahrens zur Schaffung einer perforierten Membran,
S4) Entfernen der Restschicht der Membrankammer durch Ätzen zum Freilegen der Membranschicht der Membrankammer ,
S5) wobei die Membranschicht während Schritt S1 oder in einem späteren Schritt einer zusätzlichen Behandlung zur Erhöhung der mechanischen Festigkeit ausgesetzt wird, der folgendes enthält:
S51) Erzeugen von Kristallkeimen in der Membranschicht im Schritt S1 und/oder
S52) Temperaturbehandlung der Struktur aus Trägerschicht und Membranschicht, insbesondere Erhitzen, zur Erhöhung des kristallinen Anteils in der Membranschicht in Schritt S1 und/oder S5; und/oder
S53) isostatisches Heißpressen der Struktur aus Trägerschicht und Membranschicht zur Erhöhung des kristallinen Anteils in der Membranschicht in Schritt S5; und/oder
S54) Erzeugen einer inneren Vorspannung in der Membranschicht in Schritt S1 oder S5.

2. Verfahren nach Anspruch 1, **dadurch gekennzeichnet, daß** die behandelte Membranschicht einen kristallinen Anteil von mindestens 25% aufweist.

3. Verfahren nach Anspruch 1, **dadurch gekennzeichnet, daß** eine Membranschicht mittels eines chemischen Dampfabscheideverfahrens (CVD-Verfahren) auf ein Trägersubstrat aufgebracht wird.

4. Verfahren nach Anspruch 1, **dadurch gekennzeichnet, daß** eine Membranschicht mittels eines physikalischen Dampfabscheideverfahrens (PVD-Verfahren) auf ein Trägersubstrat aufgebracht wird.

5. Verfahren nach einem der vorhergehenden Ansprüche,
**dadurch gekennzeichnet,**
**daß** die Membranschicht aus einem keramischen Material besteht.

6. Verfahren nach Anspruch 5, **dadurch gekennzeichnet, daß** die Membranschicht aus einer Nichtoxidkeramik besteht.

7. Verfahren nach Anspruch 6, **dadurch gekennzeichnet, daß** die Membranschicht aus einer nitridischen Nichtoxidkeramik besteht.

8. Verfahren nach Anspruch 7, **dadurch gekennzeichnet, daß** die Membranschicht aus Si₃N₄ besteht.

9. Verfahren nach Anspruch 6, **dadurch gekennzeichnet, daß** die Membranschicht aus einer carbidischen Nichtoxidkeramik besteht.

10. Verfahren nach Anspruch 9, **dadurch gekennzeichnet, daß** die Membranschicht aus SiC besteht.

11. Verfahren nach Anspruch 1, **dadurch gekennzeichnet, daß** die Temperaturbehandlung beim Aufbringen der Membranschicht in einem Temperaturbereich von ca. 200°C bis 2000°C und bei einem Prozeßdruck von ca. 5 Pa - 100 Pa durchgeführt wird.

12. Verfahren nach Anspruch 1, **dadurch gekennzeichnet, daß** der Schritt der Temperaturbehandlung ein Sintern bei Temperaturen oberhalb ca. 900°C ist.

13. Verfahren nach Anspruch 1, **dadurch gekennzeichnet, daß** die Temperaturbehandlung mittels elektromagnetischer Strahlung im Radio- oder Mikrowellenbereich durchgeführt wird.

14. Verfahren nach Anspruch 13, **dadurch gekennzeichnet, daß** die Mikrowellen im Frequenzbereich oberhalb 25 GHz liegen, vorzugsweise in einem Frequenzbereich, bei dem das Material der Membranschicht ein Maximum seiner Absorptionskurve hat.

15. Verfahren nach Anspruch 1, **dadurch gekennzeichnet, daß** das isostatische Heißpressen bei Temperaturen oberhalb ca. 750°C und Drücken oberhalb ca. 100 bar durchgeführt wird.

16. Verfahren nach Anspruch 1 und/oder Anspruch 15, **dadurch gekennzeichnet,**
**daß** der Schritt des isostatischen Heißpressens zeitlich vor dem Schritt S3 nach Anspruch 1 durchgeführt wird.

17. Verfahren nach Anspruch 1, **dadurch gekennzeichnet, daß** die Membranschicht nach Schritt S3 von Anspruch 1 gegenüber Ätzmittel geschützt wird.

18. Verfahren nach Anspruch 17, **dadurch gekennzeichnet, daß** die Membranschicht durch eine feste Abdeckung geschützt wird.

19. Verfahren nach Anspruch 17, **dadurch gekennzeichnet, daß** die Membranschicht durch ein Beschichtungsmaterial geschützt wird, welches nach Schritt S4 von Anspruch 1 wieder entfernt wird.

20. Filterelement mit einer Membranschicht (1) und einer Trägerschicht (2), wobei die Membranschicht (1) eine Vielzahl von Perforationen (6) aufweist, **dadurch gekennzeichnet,**
**daß** in der Trägerschicht (2) eine Membrankammer (3) freigelegt ist,
**daß** die Membranschicht (1) die Membrankammer (3) überspannt und
**daß** die Membranschicht (1) eine verdichtete und/oder mindestens partiell kristalline Struktur mit einer gegenüber dem Ausgangsmaterial erhöhten Festigkeit aufweist.

21. Filterelement nach Anspruch 20, **dadurch gekennzeichnet, daß** die Membranschicht (1) mit erhöhter Festigkeit eine innere mechanische Vorspannung aufweist.

22. Filterelement nach Anspruch 20, **dadurch gekennzeichnet, daß** die Membranschicht (1) Mikro- und/oder Nano-Kristallstrukturen aufweist und/oder verdichtet ist.

23. Filterelement nach einem der Ansprüche 20 bis 22,
**dadurch gekennzeichnet,**
**daß** das Trägersubstrat (2) mehrere Membrankammern (3) aufweist, die jeweils von ein und derselben Membranschicht (1) überspannt sind.

24. Filterelement nach einem der Ansprüche 20 bis 23,
**dadurch gekennzeichnet,**
**daß** die Membrankammer (3) in Draufsicht viereckig ist.

25. Filterelement nach Anspruch 24, **dadurch gekennzeichnet, daß** die Membrankammer (3) in Draufsicht die Form eines Schlitzes hat, dessen Länge mindestens das Doppelte von dessen Breite beträgt.

26. Filterelement nach einem der Ansprüche 20 bis 25,
**dadurch gekennzeichnet,**
**daß** zwei einander gegenüberliegende Flanken (4) der Membrankammer (3) unter einem Winkel (α) von kleiner gleich 90° zur Membranebene verlaufen.

27. Filterelement nach einem der Ansprüche 20 bis 26,
**dadurch gekennzeichnet,**
**daß** für einen Quotienten aus Dicke D der Membran und Porendurchmesser P folgende Beziehung gilt: 0,01 < D/P < 100, wobei für die Dicke D der Membran gilt: 0,01 µm < D < 100 µm.

28. Filterelement nach einem der Ansprüche 20 bis 27,
**dadurch gekennzeichnet,**
**daß** die Poren im wesentlichen kreisförmig sind und einen Durchmesser in der Größenordnung zwischen 0, 01 µm und 100 µm aufweisen.

29. Filterelement nach einem der Ansprüche 20 bis 28,
**dadurch gekennzeichnet,**
**daß** die Membranschicht (1) auf ihrer zur Membrankammer (3) weisenden Seite an mindestens einer Zwischenabstützung (8) aufliegt, deren Dicke kleiner ist als die Dicke des Trägersubstrats.

30. Filterelement nach einem der Ansprüche 20 bis 29,
**dadurch gekennzeichnet,**
**daß** sich die Membrankammer (3) im wesentlichen über die gesamte Fläche des Filterelements erstreckt.

31. Filterelement nach einem der Ansprüche 20 bis 30,
**dadurch gekennzeichnet,**
**daß** das Trägersubstrat aus der Gruppe folgender Stoffe ausgewählt ist: Si, SiC, Titanoxide und andere Titanverbindungen, Magnesiumoxid, Zirkoniumoxid, Nickel, Chrom, Ni-Chrom-Verbindungen, Al₂O₃, Yttriumverbindungen und daß die Membranschicht aus Si₃N₄, SiC, einer Kombination beider Stoffe oder einer anderen Siliciumkeramik besteht.

## Claims

1. Method for producing a filter element involving the following subsequent steps:
S1) application of a membrane layer to a carrier substrate,
S2) etching a membrane chamber on the side of the carrier substrate opposite the membrane layer, such that a residual layer of the carrier substrate still remains,
S3) producing pores in the membrane layer by means of a lithographic and etching process in order to create a perforated membrane,
S4) removal of the residual layer by etching in order to expose the membrane layer,
S5) wherein the membrane layer is subjected during step S1 or in a subsequent step to an additional treatment to increase the mechanical strength, which step comprises the following:
S51) generating crystal nuclei in the membrane layer during step S1 and/or
S52) subjecting the structure of the carrier layer and the membrane layer to a temperature treatment, in particular heating, in order to increase the crystalline fraction in the membrane layer in step S1 and/or S5; and/or
S53) isostatically hot-pressing of the structure of the carrier layer and the membrane layer in order to increase the content of crystalline in the membrane layer during step S5; and/or
S54) generating an internal prestress in the membrane layer during step S1 or S5.

2. Method according to claim 1, **characterized in that** the treated membrane layer has a crystalline fraction of at least 25%.

3. Method according to claim 1, **characterized in that** the membrane layer is applied to a carrier substrate by means of a chemical vapor deposition process (CVD process).

4. Method according to claim 1, **characterized in that** the membrane layer is applied to a carrier substrate by means of a physical vapor deposition process (PVD process).

5. Method according to one of the preceding claims, **characterized in that** the membrane layer consists of a ceramic material.

6. Method according to claim 5, **characterized in that** the membrane layer consists of a non-oxide ceramic.

7. Method according to claim 6, **characterized in that** the membrane layer consists of a nitride non-oxide ceramic.

8. Method according to claim 7, **characterized in that** the membrane layer consists of Si₃N₄.

9. Method according to claim 6, **characterized in that** the membrane layer consists of a carbide non-oxide ceramic.

10. Method according to claim 9, **characterized in that** the membrane layer consists of SiC.

11. Method according to claim 1, **characterized in that** the temperature treatment during applying the membrane layer is performed in a temperature range from about 200°C to 2000°C and a process pressure of about 5 Pa - 100 Pa.

12. Method according to claim 1, **characterized in that** the step of temperature treatment is a sintering at temperatures over about 900°C.

13. Method according to claim 1, **characterized in that** the temperature treatment is carried out by means of electromagnetic radiation in the radiowave or microwave range.

14. Method according to claim 13, **characterized in that** the microwave radiation lies in the frequency range above 25 GHz, preferably in a frequency range at which the material of the membrane layer has a peak in its absorption curve.

15. Method according to claim 1, **characterized in that** the isostatic hot pressing is performed at temperatures above about 750°C and pressures above 100 bar.

16. Method according to claim 1 and/or claim 15, **characterized in that** the step of the isostatic hot pressure is carried out prior to step S3 of claim 1.

17. Method according to claim 1, **characterized in that** the membrane layer is protected against etching agents after step S3 in claim 1.

18. Method according to claim 17, **characterized in that** the membrane layer is protected by a solid masking.

19. Method according to claim 17, **characterized in that** the membrane layer is protected by a coating material that is again removed after step S4 of claim 1.

20. Filter element with a membrane layer (1) and a carrier layer (2), where the membrane layer (1) has a plurality of perforations (6), **characterized in that** within the carrier layer (2) a membrane chamber (3) is exposed,
**in that** the membrane layer (1) spans over the membrane chamber (3) and
**in that** the membrane layer (1) has a compacted and/or at least partially crystalline structure with strength that has been increased over that of the starting material.

21. Filter element according to claim 20, **characterized in that** the membrane layer (1) with the increased strength comprises an internal mechanical prestress.

22. Filter element according to claim 20, **characterized in that** the membrane layer (1) has microcrystalline and/or nanocrystalline structures and/or has been compacted.

23. Filter element according to one of claims 20 to 22, **characterized in that** the carrier substrate (2) has a plurality of membrane chambers (3), each of which is spent over by one and the same membrane layer (1).

24. Filter element according to one of claims 20 to 23, **characterized in that** the membrane chamber (3) is rectangular in plan view.

25. Filter element according to claim 24, **characterized in that** the membrane chamber (3) in plan view has the shape of a slot, whose length is at least twice its width.

26. Filter element according to one of claims 20 to 25, **characterized in that** two oppositely lying sides (4) of the membrane chamber (3) run at an angle (α) of less than 90° to the plane of the membrane.

27. Filter element according to one of claims 20 to 26, **characterized in that** the ratio of the thickness D of the membrane and the pore diameter P is given by the following relationship: 0,01 < D/P < 100, wherein the following applies for the thickness D of the membrane: 0,01 µm < D < 100 µm.

28. Filter element according to one of claims 20 to 27, **characterized in that** the pores are essentially circular in shape and have a diameter in the range between 0,01 µm and 100 µm.

29. Filter element according to one of claims 20 to 28, **characterized in that** the membrane layer (1), on the side turned toward the membrane chamber (3), lies on at least one intermediate support (8), the thickness of which is less than the thickness of the carrier substrate.

30. Filter element according to one of claims 20 to 29, **characterized in that** the membrane chamber (3) essentially extends over the entire area of the filter element.

31. Filter element according to one of claims 20 to 30, **characterized in that** the carrier substrate is choosen from the group of the following substances:
Si, SiC, titanium oxide or other titanium compounds, magnesium oxide, zirconium oxide, nickel, chromium, Ni-chromium compounds, Al₂O₃, yttrium compounds, and
**in that** the membrane layer consists of Si₃N₄, SiC, a combination of both substances or another silicon ceramic.

## Revendications

1. Procédé de fabrication d'un élément de filtre comprenant les étapes consécutives suivantes :
S1) appliquer une couche de membrane sur un substrat porteur,
S2) réaliser par corrosion une chambre de membrane sur le côté opposé à la couche de membrane du substrat porteur, de sorte qu'il reste encore une couche résiduelle du substrat porteur,
S3) produire des pores dans la couche de membrane au moyen d'un procédé de lithographie et de corrosion pour créer une membrane perforée,
S4) éliminer la couche résiduelle de la chambre de membrane par corrosion pour dégager la couche de membrane de la chambre de membrane,
S5) la couche de membrane étant exposée pendant l'étape S1 ou dans une étape ultérieure à un traitement supplémentaire, destiné à augmenter la résistance mécanique, et qui contient les étapes suivantes :
S51) produire des germes cristallins dans la couche de membrane dans l'étape S1 et/ou
S52) traiter thermiquement la structure formée de la couche de support et de la couche de membrane, en particulier chauffer, pour augmenter la part cristalline dans la couche de membrane dans l'étape S1 et/ou S5 ; et/ou
S53) presser à chaud de façon isostatique la structure formée de la couche de support et de la couche de membrane pour augmenter la part cristalline dans la couche de membrane dans l'étape S5 ; et/ou
S54) produire une précontrainte interne dans la couche de membrane dans l'étape S1 ou S5.

2. Procédé selon la revendication 1, **caractérisé en ce que** la couche de membrane traitée présente une part cristalline d'au moins 25 %.

3. Procédé selon la revendication 1, **caractérisé en ce qu'**une couche de membrane est appliquée sur un substrat porteur au moyen d'un procédé de dépôt chimique en phase vapeur (procédé CVD).

4. Procédé selon la revendication 1, **caractérisé en ce qu'**une couche de membrane est appliquée sur un substrat porteur au moyen d'un procédé de dépôt physique en phase vapeur (procédé PVD).

5. Procédé selon l'une quelconque des revendications précédentes, **caractérisé en ce**
**que** la couche de membrane se compose d'un matériau céramique.

6. Procédé selon la revendication 5, **caractérisé en ce que** la couche de membrane se compose d'une céramique non oxydée.

7. Procédé selon la revendication 6, **caractérisé en ce que** la couche de membrane se compose d'une céramique non oxydée à base de nitrure.

8. Procédé selon la revendication 7, **caractérisé en ce que** la couche de membrane se compose de Si₃N₄.

9. Procédé selon la revendication 6, **caractérisé en ce que** la couche de membrane se compose d'une céramique non oxydée à base de carbure.

10. Procédé selon la revendication 9, **caractérisé en ce que** la couche de membrane se compose de SiC.

11. Procédé selon la revendication 1, **caractérisé en ce que** le traitement thermique est réalisé lors de l'application de la couche de membrane dans une plage de température d'environ 200°C à 2000°C et à une pression de processus d'environ 5 Pa - 100 Pa.

12. Procédé selon la revendication 1, **caractérisé en ce que** l'étape du traitement thermique est un frittage à des températures supérieures à environ 900°C.

13. Procédé selon la revendication 1, **caractérisé en ce que** le traitement thermique est réalisé au moyen d'un rayonnement électromagnétique dans la gamme des ondes radio ou des micro-ondes.

14. Procédé selon la revendication 13, **caractérisé en ce que** les micro-ondes se trouvent dans la plage de fréquence supérieure à 25 GHz, de préférence dans une plage de fréquence pour laquelle le matériau de la couche de membrane comprend un maximum de sa courbe d'absorption.

15. Procédé selon la revendication 1, **caractérisé en ce que** le pressage à chaud isostatique est réalisé à des températures supérieures à environ 750°C et des pressions supérieures à environ 100 bar.

16. Procédé selon la revendication 1 et/ou la revendication 15, **caractérisé en ce**
**que** l'étape du pressage à chaud isostatique est réalisée temporellement avant l'étape S3 selon la revendication 1.

17. Procédé selon la revendication 1, **caractérisé en ce que** la couche de membrane est protégée contre des agents corrosifs après l'étape S3 de la revendication 1.

18. Procédé selon la revendication 17, **caractérisé en ce que** la couche de membrane est protégée par un recouvrement fixe.

19. Procédé selon la revendication 17, **caractérisé en ce que** la couche de membrane est protégée par un matériau de revêtement, lequel est retiré après l'étape S4 de la revendication 1.

20. Elément de filtre comprenant une couche de membrane (1) et une couche de support (2), la couche de membrane (1) présentant une pluralité de perforations (6), **caractérisé en ce**
**qu'**une chambre de membrane (3) est dégagée dans la couche de support (2),
**que** la couche de membrane (1) couvre la chambre de membrane (3) et
**que** la couche de membrane (1) présente une structure compactée et/ou au moins partiellement cristalline avec une résistance accrue par rapport au matériau de départ.

21. Elément de filtre selon la revendication 20, **caractérisé en ce que** la couche de membrane (1) à résistance accrue présente une précontrainte mécanique interne.

22. Elément de filtre selon la revendication 20, **caractérisé en ce que** la couche de membrane (1) présente des structures microcristallines et/ou nanocristallines et/ou est compactée.

23. Elément de filtre selon l'une quelconque des revendications 20 à 22, **caractérisé en ce**
**que** le substrat porteur (2) présente plusieurs chambres de membrane (3), qui sont couvertes respectivement par une et même couche de membrane (1).

24. Elément de filtre selon l'une quelconque des revendications 20 à 23, **caractérisé en ce**
**que** la chambre de membrane (3) est quadrangulaire, en vue de dessus.

25. Elément de filtre selon la revendication 24, **caractérisé en ce que** la chambre de membrane (3) a la forme d'une fente, en vue de dessus, dont la longueur est au moins égale au double de sa largeur.

26. Elément de filtre selon l'une quelconque des revendications 20 à 25, **caractérisé en ce**
**que** deux flancs (4) opposés l'un par rapport à l'autre de la chambre de membrane (3) s'étendent selon un angle (α) inférieur ou égal à 90° par rapport au plan de la membrane.

27. Elément de filtre selon l'une quelconque des revendications 20 à 26, **caractérisé en ce**
**que** pour un rapport entre l'épaisseur D de la membrane et le diamètre P des pores, il faut appliquer la relation suivante : 0,01 < D/P < 100, sachant que pour l'épaisseur D de la membrane, on a : 0,01 µm < D < 100 µm.

28. Elément de filtre selon l'une quelconque des revendications 20 à 27, **caractérisé en ce**
**que** les pores sont essentiellement circulaires et ont un diamètre dont l'ordre de grandeur est compris entre 0,01 µm et 100 µm.

29. Elément de filtre selon l'une quelconque des revendications 20 à 28, **caractérisé en ce**
**que** la couche de membrane (1) repose au niveau de son côté dirigé vers la chambre de membrane (3) sur au moins un support intermédiaire (8), dont l'épaisseur est inférieure à l'épaisseur du substrat porteur.

30. Elément de filtre selon l'une quelconque des revendications 20 à 29, **caractérisé en ce**
**que** la chambre de membrane (3) s'étend essentiellement sur l'ensemble de la surface de l'élément de filtre.

31. Elément de filtre selon l'une quelconque des revendications 20 à 30, **caractérisé en ce**
**que** le substrat porteur est choisi parmi le groupe de substances suivantes : Si, SiC, oxyde de titane et autres composés de titane, oxyde de magnésium, oxyde de zirconium, nickel, chrome, composés de Ni-chrome, Al₂O₃, composés d'yttrium et en ce que la couche de membrane se compose de Si₃N₄, SiC, d'une combinaison des deux substances ou d'une autre céramique de silicium.
